# EUROPEAN PATENT SPECIFICATION

(11) **EP 1 775 558 B1**
(45) Date of publication and mention of the grant of the patent: **13.04.2011**
(21) Application number: 05380224.5
(22) Date of filing: 13.10.2005
(51) Int. Cl.: G01D 5/245

(54) **Reference unit for an optoelectronic measuring device**
Referenzeinheit für ein optoelektronisches Messgerät.
Unité de reférence pour un dispositif de mesure optoélectronique.

(43) Date of publication of application: 18.04.2007
(73) Proprietor: FAGOR, S.COOP., 20500 Mondragon (Gipuzkoa) (ES)
(72) Inventor: Delgado Jimenez, Juan Carlos, 20500 Mondragon (Gipuzkoa) (ES); Zunzunegui Mugica, Javier, 20550 Aretxabaleta (Gipuzkoa) (ES)
(74) Representative: Fernandez Guzman, Juan

(56) References cited:
- US-A- 6 051 971

## Description

### TECHNICAL FIELD

The present invention relates to a reference unit for an optoelectronic measuring device, with said reference unit comprising at least one reference mark.

### PRIOR ART

Optoelectronic measuring devices that comprise a readhead and a scale that is fixed to a bedplate, with the readhead movable relative to the scale, are known. Said readhead emits light towards said scale, and the light reflected on said scale reaches photodetectors which, in accordance with said reflected light, generate counting signals.

On the scale, at least one reference mark is disposed, which is illuminated by the light emitted by the readhead when said readhead is situated above said reference mark. Said light is reflected on said reference mark and reaches the photodetectors, the readhead generating a reference signal when said photodetectors detect said reference mark. The position of the readhead in relation to the scale is determined in accordance with said counting signals, taking said reference signal as a reference.

US6051971 discloses an optoelectronic measuring device in which the reference mark is disposed on a reference unit independent of the scale. Said reference unit can be fixed to the bedplate where the user chooses. Said reference mark comprises a ferromagnetic element and the readhead comprises Hall-effect sensors, so that by means of said sensors said readhead detects said reference mark.

### DISCLOSURE OF THE INVENTION

The object of the invention is to provide a reference unit that comprises a reference mark.

The reference unit of the invention is used with an optoelectronic measuring device, said device comprising a readhead and a scale. The scale is fixed to a bedplate and the readhead moves relative to said scale, generating counting signals.

The reference unit comprises at least one reference support that is fixed to the bedplate and at least one reference mark, with the reference mark being disposed on said reference support. Said reference mark is optical, and the readhead generates a reference signal when detecting said reference mark during its movement relative to the scale.

The position of the readhead in relation to the scale is determined in accordance with the counting signals, taking said reference signal as a reference. In this way, the user can fix the reference unit to the bedplate at the required point, and an optical reference mark can be disposed at the most convenient point.

The reference support also comprises adjusting means to move the reference mark longitudinally. The reference signal can move relative to the counting signals, remaining said reference support fixed to the bedplate, thereby obtaining the synchronisation of the reference signal with the counting signals.

In this way, the fixing of the reference unit on said bedplate is facilitated, avoiding the need for adjusting said reference unit to synchronise the reference signal with the counting signals during said fixing.

These and other advantages and characteristics of the invention will be made evident in the light of the drawings and the detailed description thereof.

### DESCRIPTION OF THE DRAWINGS

Fig. 1 is a perspective view of an optoelectronic measuring device with an embodiment of the reference unit of the invention.
Fig. 2 shows the reference signal synchronised with the counting signals.
Fig. 3 is a ground view of part of the scale, and of the reference unit of Fig. 1.
Fig. 4 shows the support plate of a first embodiment of the reference unit of the invention.
Fig. 5 shows the reference support of the first embodiment of the invention.
Fig. 6 shows the support plate of a second embodiment of the reference unit of the invention.

### DETAILED DESCRIPTION OF THE INVENTION

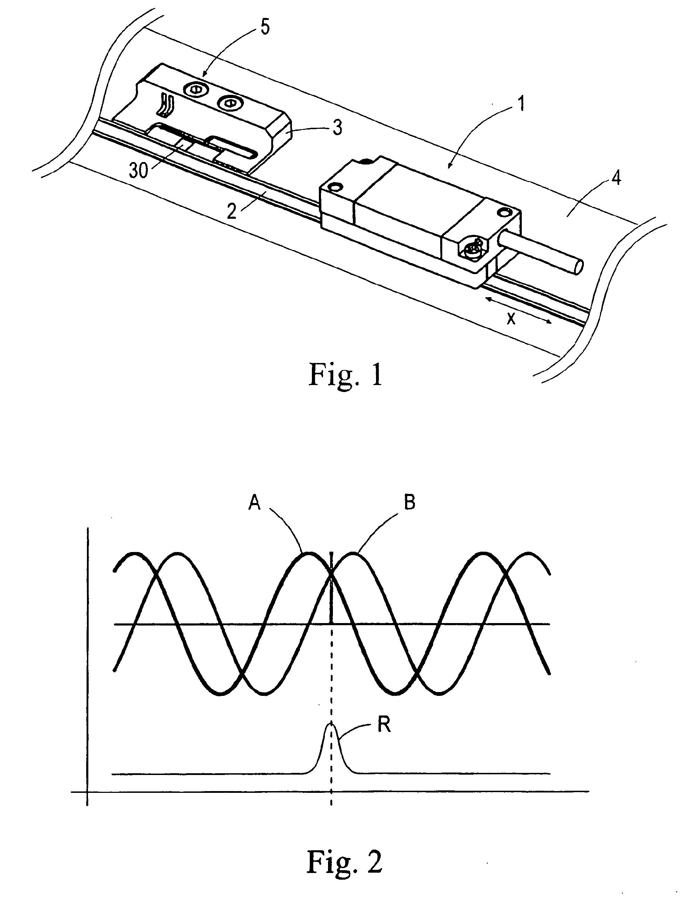

Figure 1 shows an optoelectronic measuring device with an embodiment of the reference unit of the invention. Said device comprises a readhead 1 and a scale 2 that is fixed to a bedplate 4.

The readhead 1 moves relative to the scale 2 in a direction X, generating counting signals A and B. Said readhead 1 comprises a plurality of photodetectors (not shown in the figures), and said scale 2 comprises a plurality of marks 2' distributed along the direction X. Said photodetectors detect the marks 2', and in accordance with said detection, said readhead 1 generates the counting signals A and B. In the preferred embodiment of the invention, the marks 2' are detected by reflection. In said preferred embodiment, the readhead 1 emits a beam of light that is reflected on the scale 2, with said reflected light reaching the photodetectors, and said photodetectors detecting the marks 2' by means of said reflected light.

The reference unit 5 of the invention comprises a reference support 3 that is fixed to the bedplate 4, being disposed parallel to the scale 2, and an optical reference mark 30, usually known as I0, disposed on said reference support 3. The readhead 1 generates a reference signal R when detecting said reference mark 30 during its movement relative to the scale 2. When said readhead 1 is situated over said reference support 3, the photodetectors detect the reference mark 30, with said readhead 1 generating the reference signal R in accordance with said detection. In the preferred embodiment, the beam of light emitted by said readhead 1 falls on said reference support 3 and is reflected on said reference mark 30, with the reflected light reaching said photodetectors, and said photodetectors detecting the reference mark 30 in accordance with said reflected light.

Both the counting signals A and B and the reference signal R reach control means (not shown in the figures), and are used to determine the position of said readhead 1 in relation to the scale 2. Said counting signals A and B determine the incremental position of said readhead 1 in relation to said scale 2, taking the reference signal R as a reference point.

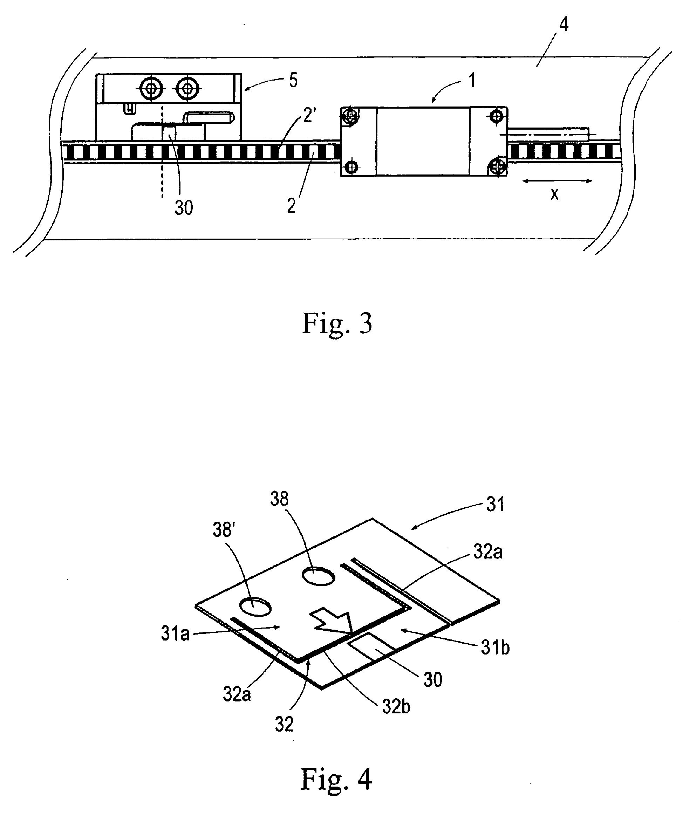

The reference support 3 comprises adjusting means to move the reference mark 30 longitudinally, with the reference unit 5 remaining fixed to the bedplate 4. In this way, once said reference unit 5 is fixed to said bedplate 4, said reference mark 30 can be moved to synchronise the reference signal R with one of the counting signals A and B, as shown in figure 2. To synchronise said reference signal R with one of said counting signals A and B, said reference mark 30 is aligned with one of the marks 2', as shown in figure 3.

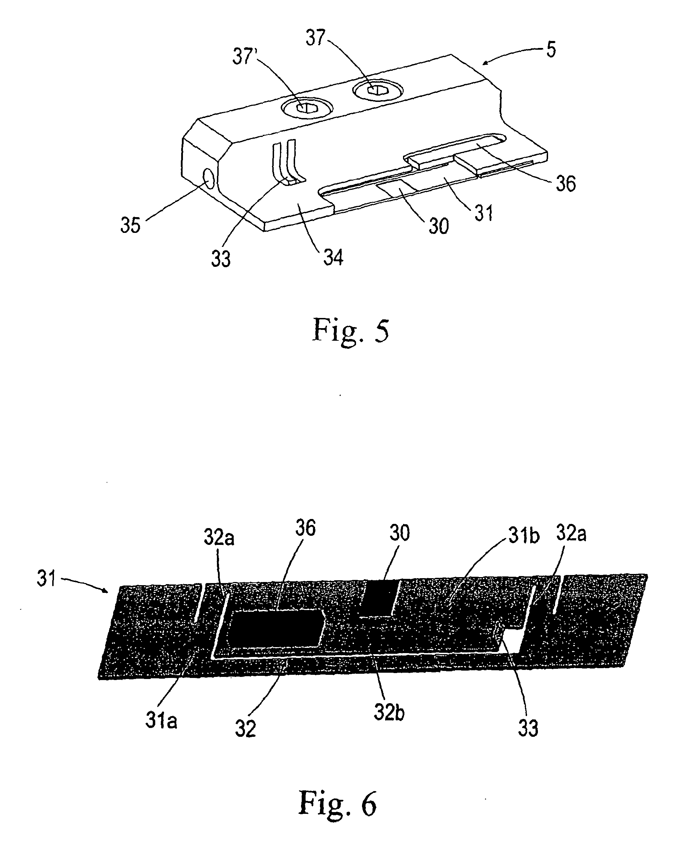

In a first embodiment of the reference unit 5 of the invention, shown in figures 4 and 5, the reference support 3 comprises a support plate 31 with a first area 31a joined to the bedplate 4, and a second area 31b that comprises the reference mark 30, as shown in figure 4. The support plate 31 comprises a separation channel 32 between said first area 31a and said second area 31b. Thus, as said support plate 31 is joined to said bedplate 4 by means of said first area 31a, said second area 31b is movable longitudinally relative to said first area 31a by means of the adjusting means, so that the reference mark 30 is moved longitudinally.

The separation channel 32 is U-shaped and comprises two transverse sections 32a and a longitudinal section 32b. Said separation channel 32 delimits the second area 31b.

The adjusting means comprise an adjusting screw (not shown in the figures), with the second area 31b of the support plate 31 being pushed by said adjusting screw, moving said second area 31b longitudinally. The adjusting means also comprise a tab 33, with the adjusting screw pushing said tab 33, and said tab 33 pushing said second area 31b.

With reference now to figure 5, the reference support 3 comprises a body 34, with the support plate 31 being housed in said body 34. The adjusting screw is housed in a housing 35 disposed in said body 34. In the first embodiment, said body 34 is fixed to the bedplate 4 by means of two fixing screws 37 and 37', although it can also be glued. The support plate 31 comprises two holes 38 and 38' in the first area 31a to allow said fixing screws 37 and 37' to pass through, so that said first area 31a is joined to said bedplate 4. In said first embodiment, the tab 33 is comprised in said body 34.

In a second embodiment of the invention, the separation channel 32 of the support plate 31 delimits the first area 31a, and the tab 33 is disposed in the second area 31b of the support plate 31. Thus, the adjusting screw pushes said tab 33, with said tab 33 pushing said second area 31b, moving the reference mark 30 longitudinally.

The reference support 3 comprises a magnet 36, and the readhead 1 comprises at least one Hall-effect sensor (not shown in the figures), with said Hall sensor detecting the magnet 36 when said readhead 1 passes over said magnet 36. If, in the presence of said magnet 36, the photodetectors detect a mark, said mark is determined to be corresponding with the reference mark 30, generating the reference signal R.

## Claims

1. Reference unit for an optoelectronic measuring device, with said device comprising a readhead (1) and a scale (2) that is fixed to a bedplate (4), with the readhead (1) moving relative to the scale (2) generating counting signals (A,B), and with the reference unit (5) comprising a reference support (3) that is fixed to the bedplate (4), being disposed parallel to said scale (2), and at least one reference mark (30) disposed on said reference support (3), with said readhead (1) adapted to generate a reference signal (R) when detecting said reference mark (30), with the position of the readhead (1) in relation to said scale (2) being determined in accordance with said counting signals (A,B) taking said reference signal (R) as a reference, **characterised in that** the reference support (3) comprises adjusting means to move the reference mark (30) longitudinally with said reference support (3) remaining fixed to the bedplate (4) and a support plate (31) with a first area (31a) connected to the bedplate (4) and a second area (31b) that comprises the reference mark (30), said support plate (31) comprising a separation channel (32) between said first area (31a) and said second area (31b), and said second area (31b) being movable longitudinally relative to said first area (31a) by means of the adjusting means, so that the reference signal (R) is synchronised with the counting signals (A,B).

2. Reference unit according to the preceding claim, wherein the separation channel (32) is U-shaped.

3. Reference unit according to the preceding claim, wherein the separation channel (32) comprises two transverse sections (32a) and a longitudinal section (32b).

4. Reference unit according to the preceding claim, wherein the separation channel (32) delimits the second area (31b) of the support plate (31).

5. Reference unit according to claim 3, wherein the separation channel (32) delimits the first area (31a) of the support plate (31).

6. Reference unit according to any of the preceding claims, wherein the adjusting means comprise an adjusting screw, the second area (31b) of the support plate (31) being pushed by means of said adjusting screw, moving said second area (31b) longitudinally relative to the first area (31a).

7. Reference unit according to the preceding claim, wherein the adjusting means comprise a tab (33), with the adjusting screw pushing said tab (33), and said tab (33) pushing the second area (31b) of the support plate (31).

8. Reference unit according to any of the preceding claims, wherein the reference support (3) comprises a body (34), with the support plate (31) being housed in said body (34), and with the body (34) being fixed to the bedplate (4).

9. Reference unit according to any of the preceding claims, wherein the reference support (3) comprises a magnet (36), with the readhead (1) generating the reference signal (R) when detecting the reference mark (30) and said magnet (36).

## Patentansprüche

1. Referenzeinheit für ein optoelektronische Messvorrichtung, wobei diese Vorrichtung umfasst einen Lesekopf (1) und eine Skala (2), welche befestigt ist auf einer Grundplatte (4), wobei sich der Lesekopf (1) im Verhältnis zur Skala (2) bewegt und dabei Zählsignale (A,B) erzeugt, und die der die Referenzeinheit (5) eine Referenzhalterung (3) umfasst, die an der Grundplatte (4) befestigt ist, so dass sie parallel zur Skala (2) angeordnet ist, und mindestens eine Referenzmarkierung (30), die auf der Referenzhalterung (3) angebracht ist, wobei der Lesekopf (1) so ausgelegt ist, dass er ein Referenzsignal (R) erzeugt, wenn die Referenzmarkierung (30) erkannt wird, wobei die Position des Lesekopfs (1) im Verhältnis zur Skala (2) von den Zählsignalen (A,B) unter Verwendung des Referenzsignals (R) als Referenz bestimmt wird, **dadurch gekennzeichnet, dass** die Referenzhalterung (3) eine Justiervorrichtung umfasst, um die Referenzmarkierung (30) längs zu verstellen, während die Referenzhalterung (3) an der Grundplatte (4) und eine Trägerplatte (31) mit einem ersten Bereich (31 a), der mit der Grundplatte (4) verbunden ist, und einem zweiten Bereich (31 b), welcher die Referenzmarkierung (30) umfasst, fixiert bleiben, wobei die Trägerplatte (31) einen Trennkanal (32) zwischen dem ersten Bereich (31 a) und dem zweiten Bereich (31 b) umfasst, und der zweite Bereich (31 b) längs im Verhältnis zum ersten Bereich (31 a) mit Hilfe der Justiervorrichtung versetzbar ist, so dass das Referenzsignal (R) mit den Zählsignalen (A,B) synchronisiert wird.

2. Referenzeinheit gemäß dem vorausgehenden Anspruch, bei der der Trennkanal (32) U-förmig ist.

3. Referenzeinheit gemäß dem vorausgehenden Anspruch, wobei der Trennkanal (32) zwei Quersektionen (32a) und eine Längssektion (32b) umfasst.

4. Referenzeinheit gemäß dem vorausgehenden Anspruch, wobei der Trennkanal (32) den zweiten Bereich (31 b) der Trägerplatte (31) abgrenzt.

5. Referenzeinheit gemäß Anspruch 3, wobei der Trennkanal (32) den ersten Bereich (31 a) der Trägerplatte (31) abgrenzt.

6. Referenzeinheit gemäß einem der vorausgehenden Ansprüche, wobei die Justiervorrichtung eine Stellschraube umfasst, wobei der zweite Bereich (31 b) der Trägerplatte (31) mit Hilfe der Stellschraube angeschoben wird und sich der zweite Bereich (31 b) längs im Verhältnis zum ersten Bereich (31 a) bewegt.

7. Referenzeinheit gemäß dem vorausgehenden Anspruch, wobei die Justiervorrichtung eine Lasche (33) umfasst, wobei die Stellschraube auf diese Lasche (33) drückt und die Lasche (33) den zweiten Bereich (31 b) der Trägerplatte (31) schiebt.

8. Referenzeinheit gemäß einem der vorausgehenden Ansprüche, wobei die Referenzhalterung (3) ein Gehäuse (34) umfasst, wobei die Trägerplatte (31) in dem Gehäuse (34) untergebracht und zusammen mit dem Gehäuse (34) auf der Grundplatte (4) befestigt ist.

9. Referenzeinheit gemäß einem der vorausgehenden Ansprüche, wobei die Referenzhalterung (3) einen Magneten (36) umfasst, wobei der Lesekopf (1) das Referenzsignal (R) erzeugt, wenn er die Referenzmarkierung (30) und den Magneten (36) erkennt.

## Revendications

1. Unité de référence pour dispositif de mesure optoélectronique, ledit dispositif comprenant une tête de lecture (1) et une échelle (2) fixée sur une plaque de base (4), la tète de lecture (1) se déplaçant par rapport à l'échelle (2) ce qui génère des signaux de comptage (A, B), et l'unité de référence (5) comprenant un support de référence (3) qui est fixé sur la plaque de base (4) qui est parallèle à ladite échelle (2) et au moins une marque de référence (30) disposé sur ledit support de référence (3), la tête de lecture (1) étant adaptée pour générer un signal de référence (R) lors de la détection de ladite marque de référence (30), la position de la tête de lecture (1) par rapport à ladite échelle (2) étant déterminée en fonction desdits signaux de comptage (A, B) en prenant ledit signal de référence (R) comme référence, **caractérisé en ce que** le support de référence (3) comprend des moyens d'ajustement pour déplacer la marque de référence (30) de manière longitudinale ledit support de référence (3) restant fixé sur la plaque de base (4) et une plaque support (31) dont une première zone (31 a) est connectée à la plaque de base (4) et dont une seconde zone (31b) comprend la marque de référence (30), ladite plaque support (31) comprenant un canal de séparation (32) placé entre ladite première zone (31 a) et ladite seconde zone (31 b) et ladite seconde zone (31b) étant déplaçable de manière longitudinale par rapport à ladite première zone (31 a) au moyen de moyens d'ajustement de manière à ce que le signal de référence (R) soit synchronisé avec les signaux de comptage (A, B).

2. Unité de référence selon la revendication précédente où le canal de séparation (32) est en forme de U.

3. Unité de référence selon la revendication précédente où le canal de séparation (32) comprend deux sections transversales (32a) et une section longitudinale (32b).

4. Unité de référence selon la revendication précédente où le canal de séparation (32) délimite la seconde zone (31 b) de la plaque support (31).

5. Unité de référence selon la revendication 3 où le canal de séparation (32) délimite la première zone (31 a) de la plaque support (31).

6. Unité de référence selon l'une quelconque des revendications précédentes où les moyens d'ajustement comprennent une vis de réglage, la seconde zone (31 b) de la plaque support (31) étant poussée au moyen de ladite vis de réglage, ce qui déplace la seconde zone (31 b) de manière longitudinale par rapport à la première zone (31 a).

7. Unité de référence selon la revendication précédente où les moyens d'ajustement comprennent un onglet (33) qui est poussé par la vis de réglage et ledit onglet (33) exerce à son tour une pression sur la seconde zone (31 b) de la plaque support (31).

8. Unité de référence selon l'une quelconque des revendications précédentes où le support de référence (3) comprend un corps (34), la plaque support (31) étant logée dans ledit corps (34) et ce corps (34) étant fixé sur la plaque de base (4).

9. Unité de référence selon l'une quelconque des revendications précédentes où le support de référence (3) comprend un aimant (36) et la tête de lecture (1) génère un signal de référence (R) lors de la détection de la marque de référence et dudit aimant (36).
